# EUROPÄISCHE PATENTSCHRIFT

(11) **EP 1 796 959 B1**
(45) Veröffentlichungstag und Bekanntmachung des Hinweises auf die Patenterteilung: **02.04.2008**
(21) Anmeldenummer: 05783015.0
(22) Anmeldetag: 20.08.2005
(51) Int. Cl.: B63H 23/26, B63H 5/125

(54) **POD-SCHIFFSANTRIEB MIT HYDRODYNAMISCHEM GETRIEBE**
POD SHIP PROPULSION SYSTEM PROVIDED WITH A HYDRODYNAMIC GEAR
MODULE POD DE PROPULSION D'UN BATEAU COMPORTANT UNE TRANSMISSION HYDRODYNAMIQUE

(30) Priorität: 05.10.2004 DE 102004048754
(43) Veröffentlichungstag der Anmeldung: 20.06.2007
(73) Patentinhaber: Voith Turbo GmbH & Co. KG, 89522 Heidenheim (DE)
(72) Erfinder: BASTECK, Andreas, 79540 Lörrach (DE)
(74) Vertreter: Dr. Weitzel & Partner
(86) Internationale Anmeldenummer: PCT/EP2005/009023
(87) Internationale Veröffentlichungsnummer: WO 2006/037401

(56) Entgegenhaltungen:
- CA-C- 1 311 657
- DE-A- 10 152 488
- US-A- 3 104 641
- US-A- 4 430 908
- DATABASE WPI Section PQ, Week 199225 Derwent Publications Ltd., London, GB; Class Q24, AN 1992-206989 XP002352518 -& SU 1 664 656 A1 (SEVERO-ZAPADNYJ ZAOCHNYJ POLT I; LE PROIZU ELMASH STR OB ELEKT) 23. Juli 1991 (1991-07-23)

## Beschreibung

Die Erfindung betrifft einen Pod-Schiffsantrieb mit Getriebe, insbesondere einem hydrodynamischen Getriebe.

Bei Pod-Schiffsantrieben werden die Schiffspropeller mit Hilfe einer elektrischen Antriebsmaschine, die in einem separaten Gehäuse außerhalb des Schiffsrumpfs untergebracht wird, angetrieben. Die Einheit aus elektrischer Antriebsmaschine, Schiffspropeller und Gehäuse ist typischerweise voll drehbar, d. h. Drehungen um 360° sind möglich. Für eine solche Konfiguration hat sich der Begriff Pod eingebürgert. Die notwendige Energie für die elektrische Antriebsmaschine wird üblicherweise mittels eines Dieselgenerators bereitgestellt, der dann wiederum an einem geeigneten Ort im Schiffsrumpf untergebracht ist. Die Verbindung zum Schiffskörper wird üblicherweise über einen Installationsblock hergestellt, indem der Pod endlos drehbar ist. Ferner befindet sich auf der Seite des Schiffsrumpfs eine Schleiferringeinheit und hydraulische Steuereinheiten zum Drehen des Pods. Die für den Propellerfreilauf notwendige Beabstandung des Pods vom Schiffsrumpf wird über einen Verbindungssteg erzielt, welcher ähnlich einem Ruderprofil ausgeformt ist. Damit stellt der Verbindungssteg eine Verbindung zwischen dem Installationsblock und dem Motorgehäuse des Pods her, welches selbst meist stromlinienförmig ausgeformt ist.

Aus dem Patent US 3104641, das als nächstliegender Stand der Technik angesehen wird, ist ein Pod-Schiffsantrieb gemäß dem Oberbegriff des unabhängigen Anspruchs 1 bekannt.

Die grundlegende Idee von Pod-Schiffsantrieben wurde bereits 1951 durch das Patent DE 2 714 866 offenbart, während die Umsetzung erst 40 Jahre später erfolgte. Seitdem haben sich Pod-Schiffsantriebe für bestimmte Schiffstypen, etwa Fähren, Eisbrecher und Kreuzfahrtschiffe, als die bevorzugten Antriebseinheiten durchgesetzt. Bisher realisierte Pod-Schiffsantriebe weisen sowohl ziehende und schiebende, wie auch eine Kombination aus ziehenden und schiebenden Schiffsschrauben auf. Insbesondere für größere Schiffseinheiten werden zwei oder mehr Pod-Schiffsantriebe bevorzugt, wobei diese durch die unabhängige Steuerung der Schiffsschrauben und bezüglich der Orientierung des entsprechenden Pods im Vergleich zum Schiffsrumpf unabhängig voneinander agieren können.

Der besondere Vorzug von Pod-Schiffsantrieben besteht in der hieraus resultierenden verbesserten Manövrierfähigkeit. Alternative Systeme, wie Ruderpropeller, sind üblicherweise für langsam fahrende Schiffe konzipiert und entsprechen bezüglich ihrer hydrodynamischen Optimierung nicht den Anforderungen erhöhter Fahrgeschwindigkeiten, wie sie durch Pod-Schiffsantriebe möglich sind. Für besonders wendige Schiffe sind außerdem Voith-Schneider-Antriebe bekannt geworden, bei welchen die Größe und Richtung des Propellerhubs schnell und stufenlos geändert werden können. Nachteilig bei solchen Voith-Schneider-Antrieben ist allerdings deren komplizierte Herstellung und die hieraus folgenden Kosten, so dass sich für dieses Antriebsprinzip insbesondere kleinere Schiffe als geeignet erwiesen haben.

Die von einem Pod-Schiffsantrieb erzeugten Kräfte sind als eine Kombination aus Propeller- und Ruderkräften zusehen. Demnach verbindet ein Pod-Schiffsantrieb aktive und passive Steuereinrichtungen, wobei allerdings bei hohen Fahrtgeschwindigkeiten auch hohe Steuerkräfte resultieren. Ein Pod-Schiffsantrieb kann darüber hinaus gezielt auf gute hydrodynamische Effektivität konstruiert werden und dient somit in erster Linie als Vortriebsorgan mit gleichzeitig ausgezeichneten Steuereigenschaften. Hieraus folgt, dass auf die konventionell üblichen Steuerungssysteme, wie etwa Heckstrahlruder, verzichtet werden kann. Weitere spezifische Vorteile eines Pod-Schiffsantriebs bestehen in der Steuerbarkeit auch bei Notstoppmanövern, einer Verringerung der Vibrationsneigung des Schiffs sowie der Möglichkeit beim Bau des Schiffs, den Schiffsantrieb aufgrund der modularen Struktur des Antriebssystemes erst zu einem deutlich späteren Zeitpunkt in die Schiffskonstruktion mit einzubeziehen.

Ferner ergeben sich weitere Vorteile aufgrund der diesel-elektrischen Antriebskombination, die für einen Pod-Antrieb vorliegt. Während beim konventionellen Schiffsantrieb durch die Antriebswelle, welche den

Schiffspropeller und die Dieselmaschine verbindet, ein zusätzlicher Platzbedarf besteht, kann durch die getrennte Unterbringung eines Dieselgenerators zum einen und des außerhalb des Schiffsrumpfs befindlichen elektrischen Antriebssystems ein Raumgewinn erzielt werden. Darüber hinaus kann durch den Wegfall einer Antriebswelle der Dieselgenerator an einem hierfür geeigneten Ort untergebracht werden. Hieraus folgt eine erhöhte Gestaltungsfreiheit bei der Ausbildung des Achterschiffs und der daran angrenzenden Ladebereiche. Ein solcher zusätzlicher Stauraum ist insbesondere für Frachtschiffe und RoRo-Fähren von Vorteil.

Bei der Verwendung von Pod-Schiffsantrieben besteht auch bei Revierfahrten im allgemeinen kein Schlepperbedarf. Insbesondere dieser Vorteil hat bei Kreuzfahrtschiffen, die oft an wenig ausgebauten Hafenanlagen anlegen, zur Durchsetzung des Pod-Schiffsantriebs geführt. Ein weiterer Vorteil von dieselelektrisch betriebenen Schiffen insbesondere für solche Fahrzeuge, welche einen hohen Bord-Energiebedarf haben, besteht darin, dass auch bei kleinen Fahrgeschwindigkeiten die volle Leistung der Dieselhauptmaschine zur elektrischen Versorgung zur Verfügung steht. Dies ist beispielsweise bei Fährschiffen relevant.

Gegenüber konventionellen Schiffsantrieben weist ein Pod-Schiffsantrieb jedoch auch Nachteile auf. Dieser ist insbesondere in einem zusätzlichen Leistungsverlust und dem daraus resultierenden Mehrverbrauch von etwa 3-6 % gegenüber konventionellen Antrieben zu sehen. Außerdem haben konventionelle Antriebe nach wie vor insbesondere bei besonders schnell fahrenden Schiffen Vorteile. Diese sind wenigstens zum Teil darin begründet, dass aufgrund der notwendigerweise hydrodynamische optimierten Gehäuseform des Pods die elektrische Antriebsmaschine bezüglich ihrer Dimensionen einer Begrenzung unterliegt. So hat sich erwiesen, dass ein Gehäusedurchmesser des Pods von etwas weniger als 50 % des Propellerdurchmessers zu bevorzugen ist. Die hieraus resultierende Notwendigkeit, klein bauende elektrische Antriebsmaschinen zu verwenden, bedeutet auch gleichzeitig, dass das zur Verfügung gestellte Motordrehmoment und entsprechend auch das Moment des Schiffspropellers begrenzt ist. Hieraus folgt, dass anstatt eines optimal langsam laufenden Schiffspropellers ein solcher mit einer höheren Drehzahl erforderlich ist und so gegenüber einem Antrieb mit kleiner Drehzahl und größerem Propeller mehrere zusätzliche Verlustprozente für Pod-Schiffsantriebe hinzukommen. Diese Verluste können nur zum Teil durch die Gewinne, die durch den fehlenden Widerstand von zusätzlichen Ruderanlagen sowie die Möglichkeit, das Achterschiff bei Verwendung eines Pod-Schiffsantriebs optimal zu gestalten, kompensiert werden.

Der Erfindung liegt die Aufgabe zugrunde, einen Pod-Schiffsantrieb so zu gestalten, dass die voranstehenden Nachteile überwunden werden. Insbesondere sollte ein solcher Pod-Schiffsantrieb angegeben werden, der für die Verwendung langsam drehender Schiffspropeller geeignet ist und zugleich eine hydrodynamisch bevorzugte Außengestalt bei kleinerem Pod-Durchmesser erlaubt. Ferner sollte die Energieeffizienz des gesamten diesel-elektrischen Antriebssystems für einen Pod-Schiffsantrieb verbessert werden.

Zur Lösung der erfindungsgemäßen Aufgabe haben die Erfinder zunächst erkannt, dass eine schnell laufende elektrische Antriebsmaschine kombiniert mit einem hydrodynamischen Getriebe einen langsam laufenden und damit optimalen Propeller antreiben kann, wobei aufgrund der Schnellläufigkeit des elektrischen Antriebs auch gleichzeitig eine Baugrößenreduktion folgt, was wiederum einer vorteilhaften und besseren Gestaltung des Pods zugute kommt.

Bei einer elektrischen Antriebsmaschine wird das Spaltmoment im wesentlichen durch das Magnetfeld und durch den Durchmesser des Rotors bestimmt. Für Motoren, die aus gleichen Materialien hergestellt werden, ist folglich keine wesentliche Verbesserung des magnetischen Flusses möglich, so dass lediglich über den Durchmesser und der Länge des Rotors eine Vergrößerung des Spaltmoments und damit Antriebsmoments erzielt werden kann. Werden jedoch schnellläufige Motoren eingesetzt, so ist eine wesentliche Reduktion des Durchmessers der elektrischen Antriebe bei gleicher Leistungsabgabe möglich.

Erfindungsgemäß wird zur Ankopplung der schnelllaufenden elektrischen Maschine an den langsam laufenden Schiffspropeller ein hydrodynamisches Getriebe verwendet. Ein solches Getriebe zeichnet sich durch die Verwendung einer hydrodynamischen Einheit, beispielsweise eines hydrodynamischen Wandlers, einer hydrodynamischen Kupplung oder eines Trilokwandlers aus, welcher wenigstens einen Teil des von der elektrischen Antriebsmaschine zum Schiffspropeller geleiteten Leistungsflusses regelt bzw. steuert.

Als besonders bevorzugt hat sich hierbei die Verwendung von mindestens zwei Leistungszweigen herausgestellt, die mittels eines Überlagerungsgetriebes, beispielsweise eines Planetenradgetriebes oder eines Koppelgetriebes, wieder zusammengeführt werden, um wenigstens mittelbar Leistung auf den Schiffspropeller zu übertragen. In einer bevorzugten Ausgestaltung wird die elektrische Antriebsmaschine mit einem ersten Leistungszweig wenigstens mittelbar verbunden, welcher wiederum wenigstens mittelbar das Sonnenrad eines Planetengetriebes antreibt. Ein zweiter Leistungszweig, welcher eine hydrodynamische Komponente umfasst, weist eine wenigstens mittelbare Kopplung zum ersten Leistungszweig auf und überträgt ebenfalls Leistung auf das Planetenradgetriebe, beispielsweise durch eine wenigstens mittelbare Ankopplung an das Hohlrad desselben. Die so über das Planetenradgetriebe als Überlagerungsgetriebe zusammengeführten Leistungsflüsse aus dem ersten und dem zweiten Leistungszweig dienen dazu, einen wenigstens mittelbar an die Planetenradträger des Planetengetriebes gekoppelten Schiffspropeller anzutreiben, der im Vergleich zur elektrischen Antriebsmaschine mit deutlich niedrigerer und variabler Drehzahl umläuft.

Im Rahmen des fachmännischen Ermessens ist es möglich, die Leistungsflüsse bei Verwendung eines Planetengetriebes auch in anderer Form zusammenzuführen, so ist es beispielsweise denkbar, dass der erste Leistungszweig auf das Hohlrad und der zweite Leistungszweig auf das Sonnenrad des Planetengetriebes wenigstens mittelbar zugreift. Auch Kombinationen oder die Verwendung alternativer Überlagerungsgetriebe sind denkbar.

Durch die Steuerung und Regelung einer hydrodynamischen Komponente ist es nun möglich, den Leistungsfluss vom ersten auf den zweiten Leistungszweig zu regeln und/oder zu steuern und damit die Ausgangsdrehzahl des Überlagerungsgetriebes einzustellen.

In einer besonders bevorzugten Ausgestaltung der Erfindung wird die elektrische Antriebsmaschine mit konstanter Drehzahl betrieben, während entsprechend den Anforderungen für den Schiffsantrieb unterschiedliche Drehzahlen für den Schiffspropeller resultieren. Im Unterschied zur Erfindung wird gemäß dem Stand der Technik die Umlaufdrehzahl der Schiffspropeller über die Frequenzumrichtereinheiten der elektrischen Antriebsmaschine angepasst. Durch die Verlagerung der Regelung bzw. Steuerung für die Umlaufdrehzahl des Schiffspropellers in das hydrodynamische Getriebe des erfindungsgemäßen Pod-Schiffsantriebs kann nun vorteilhafterweise die elektrische Antriebsmaschine mit einer festen Drehzahl und damit immer im Bestpunkt bezüglich des Wirkungsgrads und der Verluste betrieben werden. Darüber hinaus wird auch die Überhitzungsneigung des Motors deutlich reduziert.

Hierbei wird insbesondere bevorzugt, wenn der gesamte diesel-elektrische Antrieb des erfindungsgemäßen Pod-Schiffsantriebs auf einer Mittelspannungsebene arbeitet, da hieraus bezüglich des Platzbedarfs für die Zuleitungen und der Verluste eine vorteilhafte Ausgestaltung vorliegt.

Nachfolgend wird die Erfindung anhand von Figuren genauer beschrieben.
- Figur 1: zeigt eine erste Ausgestaltung eines Antriebsstranges für einen erfindungsgemäßen Pod-Schiffsantrieb mit einem hydrodynamischen Getriebe;
- Figur 2: zeigt eine Weitergestaltung des hydrodynamischen Getriebes aus Figur 1 mit einer zusätzlichen Untersetzungsstufe zur Verringerung der Drehzahl des Schiffspropellers;
- Figur 3: zeigt ein Achterschiff mit einem Pod-Schiffsantrieb mit Doppelpropelleranordnung.

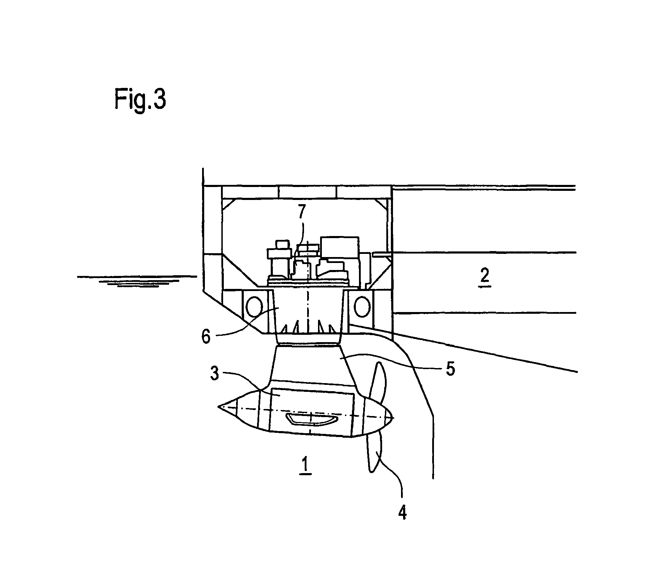

In Figur 3 ist die typische Anordnung eines Pod-Schiffsantriebs 1 am Achterschiff eines Schiffsrumpfs 2 dargestellt. Die außerhalb des Schiffsrumpfs 2 liegende Einheit, welche typischerweise als Pod bezeichnet wird, umfasst als wesentliche Komponenten ein Gehäuse 3, wenigstens einen Schiffspropeller 4, wobei im vorliegenden Fall ein ziehender Schiffspropeller 4 dargestellt ist.

Entsprechend einer vorteilhaften Gestaltung ist der Durchmesser des Gehäuses, d. h. der Durchmesser des auf die Fläche des Schiffspropellers 4 projizierten Gehäuseausdehnung < 50 % des Schiffspropellerdurchmessers.

Die weiter in Figur 3 dargestellten Komponenten des Pod-Schiffsantriebs umfassen einen Verbindungssteg, welcher für eine Beabstandung des Pods gegen den Schiffsrumpf sorgt und welcher typischerweise in Ruderform ausgebildet ist. Die Befestigung des Verbindungsstegs am Schiffsrumpf 2 wird durch einen Installationsblock 6 hergestellt, der eine Endlosdrehung des Pods erlaubt sowie üblicherweise weitere Komponenten wie eine hydraulische Steuereinheit zum Drehen des Pods sowie Luft/Wasser-Wärmetauscher für die Motorkühlluft umfasst.

An einer geeigneten Stelle im Schiffsrumpf, üblicherweise achtern, ist ein Dieselgenerator 7 zur Versorgung der elektrischen Antriebsmaschine des Pods mit Strom angeordnet. Als elektrische Antriebe eines Pods können sowohl Synchron- als auch Asynchron-Maschinen verwendet werden, wobei aus Sicherheitsgründen meist auf Motoren mit einer Doppelwicklungsanordnung, die von zwei Transformatoren gespeist werden, zurückgegriffen wird. Mittels Umformern wird bei den dem Stand der Technik entsprechenden direkt elektrisch angetriebenen Schiffspropellern ohne Getriebe die Drehzahl und das Drehmoment des Motors über Frequenzumrichter geregelt. Diese sind im einzelnen nicht in Figur 3 dargestellt.

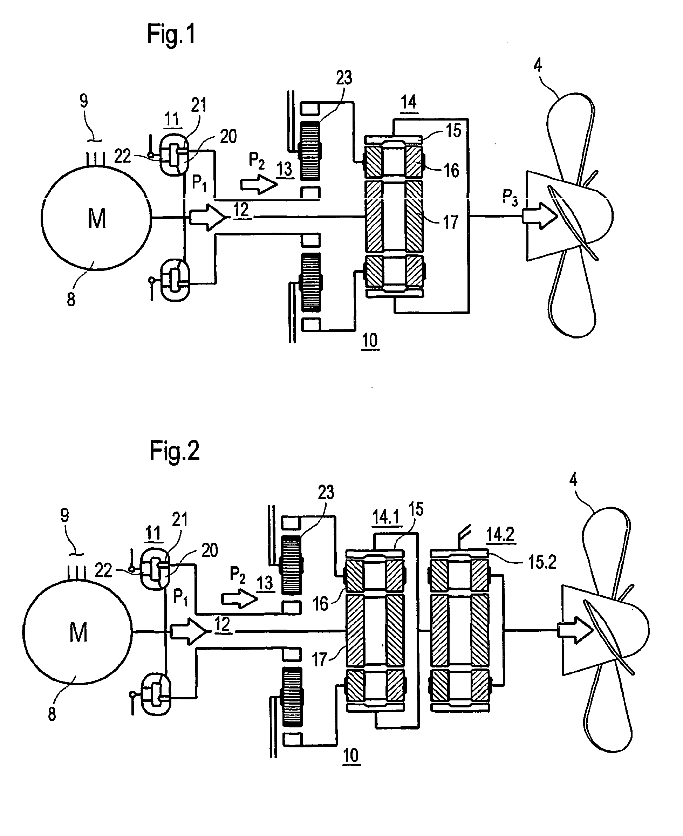

Aus Figur 1 ist die erfindungsgemäße Darstellung eines Antriebsstrangs für einen Pod-Schiffsantrieb in schematisch vereinfachter Art und Weise dargestellt. Die elektrische Antriebsmaschine 8 wird von einem Generator der an einem Dieselmotor oder einer Gasturbine gekoppelt ist, gespeist und ist insbesondere als schnell laufender Elektromotor ausgebildet. Hierbei wird unter schnell laufend eine Drehzahl verstanden, die höher liegt als die erwünschte Umlaufgeschwindigkeit des Schiffspropellers 4, typischerweise wird eine höhere Umlaufgeschwindigkeit als 200 U/min vorliegen. Besonders bevorzugt wird die Einstellung einer konstanten Drehzahl für die elektrische Antriebsmaschine. Die konstant drehzahllaufende elektrische Antriebsmaschine kann entsprechend der Polzahl und der Netzfrequenz, z. B. 50 Hz, mit einer Konstantdrehzahl von beispielsweise N₁ = 600, N₂ = 750, N₃ = 1000, N₄ = 1500 betrieben werden.

Erfindungsgemäß umfasst der Antriebsstrang für den Pod-Schiffsantrieb ein hydrodynamisches Getriebe 10, eine hydrodynamische Komponente 11. Der Antriebsstrang umfasst einen ersten Leistungszweig 12 und einen zweiten Leistungszweig 13. Sowohl der erste Leistungszweig 12 wie auch der zweite Leistungszweig 13 stehen wenigstens in mittelbarer Wirkverbindung zu einem Überlagerungsgetriebe 14. Im Ausführungsbeispiel gemäß Figur 1 ist als Überlagerungsgetriebe 14 ein Planetengetriebe dargestellt, umfassend ein Hohlrad 15, einen Planetenradträger 16 und ein Sonnenrad 17.

In der vorliegenden Ausführungsbeispiel steht der erste Leistungszweig 12 des hydrodynamischen Getriebes mit dem Sonnenrad 17 des Planetengetriebes in wenigstens mittelbarer Verbindung, in einer bevorzugten Ausgestaltung handelt es sich hierbei um eine schnell laufende Welle, welche unmittelbar von der elektrischen Antriebsmaschine 8 angetrieben wird. In einer alternativen Ausgestaltung ist es jedoch auch denkbar, im ersten Leistungszweig 12 zusätzliche Getriebekomponenten zwischenzuschalten.

Der zweite Leistungszweig 13 umfasst erfindungsgemäß wenigstens eine hydrodynamische Komponente 11, im hier dargestellten Fall einen hydrodynamischen Wandler. Dieser steht mittels seines Pumpenrads 20 in wenigstens mittelbarer Wirkverbindung zum ersten Leistungszweig 12 und überträgt Leistung über das Turbinenrad 21 in Abhängigkeit der Stellung des Leitrads 22 Leistung vom ersten Leistungszweig 12 auf den zweiten Leistungszweig 13. Der zweite Leistungszweig 13 steht in wenigstens mittelbarer Wirkverbindung zum Überlagerungsgetriebe 14. Im hier dargestellten Fall wird Leistung über ein zusätzliches Standgetriebe 23 mit einem festen Übersetzungsverhältnis, welches der Drehzahlanpassung dient, auf den Planetenradträger 16 übertragen.

Durch die Steuerung bzw. Regelung des Leistungsflusses vom ersten Leistungszweig 12 auf den zweiten Leistungszweig 13 über die hydrodynamische Komponente 11 ist es nun möglich, eine Anpassung der Ausgangsdrehzahl des Überlagerungsgetriebes 14 vorzunehmen. Im vorliegenden Falle fließt über das Hohlrad 15 des Planetenradgetriebes Leistung vom Übertagerungsgetriebe 14, hier dem Planetenradgetriebe, auf den Schiffspropeller 4. Entsprechend der Steuerung bzw. Regelung der hydrodynamischen Komponente 11 kann diese Drehzahl entsprechend den Antriebserfordernissen des Schiffsfahrzeugs angepasst werden.

Besonders bevorzugt wird eine direkte Kopplung der hydrodynamischen Komponente 11 mit der üblicherweise schnell umlaufenden Achse des ersten Leistungszweigs 12, so dass die im zweiten Leistungszweig 13 angeordnete hydrodynamische Komponente 11 effizient betrieben werden kann. In der Ausgestaltung gemäß Figur 1 ist ein unmittelbarer Zugriff des Pumpenrads 20 auf die Ausgangswelle der elektrischen Antriebseinheit 8 skizziert, die durch einen schnellen Umlauf gekennzeichnet ist.

Figur 2 zeigt eine Weitergestaltung des erfindungsgemäßen Antriebsstrangs für Pod-Schiffsantriebe, wobei ein erstes Überlagerungsgetriebe 14.1 der Zusammenführung der Leistungsflüsse des ersten Leistungszweigs 12 sowie des zweiten Leistungszweigs 13 dient. Die nachfolgende Getriebekomponente 14.2 mit festem Übersetzungsverhältnisses, welche in der hier dargestellten Ausgestaltung ebenfalls als Planetenradgetriebe mit festgestelltem Hohlrad 15.2 skizziert ist, wird eine weitere Reduktion der Umlaufsgeschwindigkeit des Schiffspropellers 4 ermöglicht, wodurch die Verwendung eines langsam laufenden, groß bauenden und damit effizienten Schiffspropellers 4 ermöglicht wird.

Dieser in Figur 2 weitergestaltete Antriebsstrang kann auch als zweistufiges Koppelgetriebe statt des Überlagerungsgetriebes 14.1 und der nachfolgenden Getriebekomponente 14.2 ausgeführt werden. Die Leistungszusammenführung des Leistungszweiges 12 und 13 erfolgt dann im kompletten zweistufigen Koppelgetriebe.

## Patentansprüche

1. Pod-Schiffsantrieb umfassend
ein drehbar am Schiffsrumpf befestigtes Gehäuse (3);
eine elektrische Antriebsmaschine (8) innerhalb des Gehäuses (3); wenigstens einen Schiffspropeller (4) außerhalb des Gehäuses (3);
ein Getriebe, mittels dessen die elektrische Antriebsmaschine (8)
mit dem Schiffspropeller (4) verbunden ist,
**dadurch gekennzeichnet, dass** das Getriebe ein hydrodynamisches Getriebe (11) ist, wobei: das hydrodynamische Getriebe (11) einen ersten Leistungszweig (12) und wenigstens einen zweiten Leistungszweig (13) umfasst, wobei der erste Leistungszweig (12) in wenigstens mittelbarer Verbindung zur elektrischen Antriebsmaschine (8) steht und der zweite Leistungszweig (13) eine hydrodynamische Komponente (11) umfasst, die in wenigstens mittelbarer Verbindung zum ersten Leistungszweig (12) steht;
die Leistungsflüsse auf dem ersten und dem zweiten Leistungszweig (12,13) mittels eines Überlagerungsgetriebes (14) zusammengeführt werden, so dass wenigstens mittelbar Leistung auf den Schiffspropeller (4) übertragen wird;
die Drehzahl des Schiffpropellers (4) durch die Steuerung und/oder Regelung der hydrodynamischen Komponente (11) so eingestellt wird, dass die elektrische Antriebsmaschine (8) eine im Wesentlichen konstante Drehzahl aufweist und der Schiffspropeller (4) drehzahlvariabel ist

2. Pod-Schiffsantrieb nach Anspruch 1, **dadurch gekennzeichnet, dass** das Überlagerungsgetriebe (14) als Planetengetriebe oder als Koppelgetriebe ausgebildet ist

3. Pod-Schiffsantrieb nach wenigstens einem der Ansprüche 1 oder 2,
**dadurch gekennzeichnet, dass** die hydrodynamische Komponente (11) im zweiten Leistungszweig (13) ein hydrodynamischer Wandler oder eine hydrodynamische Kupplung oder ein Trilockwandler ist.

4. Pod-Schiffsantrieb nach wenigstens einem der Ansprüche 1 bis 3, **dadurch gekennzeichnet, dass** die elektrische Antriebsmaschine (8) als schnell läufige Antriebsmaschine ausgebildet ist und der Achiffspropeller (4) mit einer niedrigen Drehzahl angetrieben wird.

5. Pod-Schiffsantrieb nach wenigstens einem der Ansprüche 1 bis 4, **dadurch gekennzeichnet, dass** eine Projektion des Gehäuses (3) auf den Schiffspropeller (4) kleiner als der Durchmesser des Schiffspropellers (4) ist.

## Claims

1. A pod ship propulsion drive, comprising a housing (3) rotatably connected to a ship hull, an electric drive motor (8) within the housing (3), at least one propeller (4) disposed outside of the housing (3), a gear by means of which the electric drive motor (8) is connected to the ship's propeller (4), **characterized in that** the gear is a hydrodynamic gear (11), with the hydrodynamic gear (11) comprising a first power branch (12) and at least one second power branch (13), with the first power branch (12) being in an at least indirect connection to the electric drive motor (8) and the second power branch (13) comprising a hydrodynamic component (11) which is in an at least indirect connection to the first power branch (12), with the power flows on the first and second power branch (12, 13) being combined by means of a superposition gear (14) in such a way that power is transferred to the propeller (4) at least indirectly, the speed of the propeller (4) being set by the open-loop and/or closed-loop control of the hydrodynamic components (11) in such a way that the electric drive motor (8) has a substantially constant speed and the propeller (4) is speed-variable.

2. A pod ship propulsion drive according to claim 1, **characterized in that** the superposition gear (14) is arranged as a planetary gear or as a linkage gear.

3. A pod shop propulsion drive according to at least one of the claims 1 or 2, **characterized in that** the hydrodynamic component (11) in the second power branch (13) is a hydrodynamic converter or a hydrodynamic coupling or a TRILOK torque converter.

4. A pod ship propulsion drive according to at least one of the claims 1 to 3, **characterized in that** the electric drive motor (8) as a rapidly running drive motor and the propeller (4) is driven at a low speed.

5. A pod ship propulsion drive according to at least one of the claims 1 to 4, **characterized in that** a projection of the housing (3) onto the propeller (4) is smaller than the diameter of the propeller (4).

## Revendications

1. Propulseur de navire à nacelle comprenant :
un logement (3) fixé avec possibilité de rotation sur la coque du navire;
un moteur de propulsion électrique (8) à l'intérieur du logement (3) ;
au moins une hélice de navire (4) à l'extérieur du logement (3) ;
un engrenage au moyen duquel le moteur de propulsion électrique (8) est relié à l'hélice de navire (4) ;
**caractérisé en ce que** l'engrenage est un embrayage hydrodynamique (11), dans lequel
l'embrayage hydrodynamique (11) comprend une première branche de puissance (12) et au moins une deuxième branche de puissance (13), la première branche de puissance (12) étant au moins indirectement reliée au moteur de propulsion électrique (8) et la deuxième branche de puissance (13) comprenant un composant hydrodynamique (11) qui est au moins indirectement relié à la première branche de puissance (12) ;
les flux de puissance vers la première branche de puissance (12, 13) et la deuxième sont réunis au moyen d'une transmission à superposition (14), de sorte que la puissance est au moins indirectement transmise à l'hélice de navire (4) ;
la vitesse de rotation de l'hélice de navire (4) est réglée par la commande et/ou la régulation du composant hydrodynamique (11) de telle manière que le moteur de propulsion électrique (8) présente une vitesse de rotation sensiblement constante et que l'hélice de navire (4) ait une vitesse de rotation variable.

2. Propulseur de navire à nacelle selon la revendication 1, **caractérisé en ce que** la transmission à superposition (14) est conçue comme un train planétaire ou un engrenage accouplé.

3. Propulseur de navire à nacelle selon l'une au moins des revendications 1 ou 2, **caractérisé en ce que** le composant hydrodynamique (11) de la deuxième branche de puissance (13) est un convertisseur hydrodynamique ou un embrayage hydrodynamique ou un convertisseur Trilock.

4. Propulseur de navire à nacelle selon l'une au moins des revendications 1 à 3, **caractérisé en ce que** le moteur de propulsion électrique (8) est conçu comme un moteur d'entraînement à rotation rapide et l'hélice de navire (4) est entraînée à une vitesse de rotation plus basse.

5. Propulseur de navire à nacelle selon l'une au moins des revendications 1 à 4, **caractérisé en ce qu'**une projection du logement (3) sur l'hélice de navire (4) est plus petite que le diamètre de l'hélice de navire (4).
